(19) **Europäisches Patentamt**

**European Patent Office**

**Office européen des brevets**

(11) **EP 1 228 301 B1**

(12) **EUROPÄISCHE PATENTSCHRIFT**

(45) Veröffentlichungstag und Bekanntmachung des Hinweises auf die Patenterteilung:
**13.08.2003 Patentblatt 2003/33**

(21) Anmeldenummer: **00987073.4**

(22) Anmeldetag: **03.11.2000**

(51) Int Cl.$^7$: **F01N 11/00**

(86) Internationale Anmeldenummer:
**PCT/DE00/03868**

(87) Internationale Veröffentlichungsnummer:
**WO 01/034960 (17.05.2001 Gazette 2001/20)**

(54) **VERFAHREN ZUM ÜBERPRÜFEN EINES ABGASKATALYSATORS EINER BRENNKRAFTMASCHINE**

METHOD OF MONITORING THE EXHAUST CATALYST OF AN INTERNAL COMBUSTION ENGINE

PROCEDE POUR CONTROLER LE POT CATALYTIQUE DE GAZ D'ECHAPPEMENT D'UN MOTEUR A COMBUSTION INTERNE

(84) Benannte Vertragsstaaten:
**DE FR**

(30) Priorität: **08.11.1999 DE 19953601**

(43) Veröffentlichungstag der Anmeldung:
**07.08.2002 Patentblatt 2002/32**

(73) Patentinhaber: **SIEMENS AKTIENGESELLSCHAFT**
**80333 München (DE)**

(72) Erfinder:
- **ZHANG, Hong**
**93105 Tegernheim (DE)**
- **BEER, Johannes**
**93047 Regensburg (DE)**

(56) Entgegenhaltungen:
**EP-A- 0 814 249**        **DE-A- 2 328 459**

- **PATENT ABSTRACTS OF JAPAN vol. 1995, no. 10, 30. November 1995 (1995-11-30) & JP 07 180535 A (FUJI HEAVY IND LTD), 18. Juli 1995 (1995-07-18)**
- **PATENT ABSTRACTS OF JAPAN vol. 015, no. 237 (P-1216), 19. Juni 1991 (1991-06-19) & JP 03 073839 A (NISSAN MOTOR CO LTD), 28. März 1991 (1991-03-28)**
- **SIDERIS M: "Methods for monitoring and diagnosing the Efficiency of Catalytic Converters - A Patent oriented Survey" 1998 , EPO APPLIED TECHNOLOGY SERIES. VOL. 14. STUDIES IN SURFACE SCIENCE AND CATALYSIS. VOL. 115,NL,AMSTERDAM, ELSEVIER, PAGE(S) 335-349 XP002166000 ISBN: 0-444-82952-0 Seite 338, letzter Absatz -Seite 339, Absatz 1 Seite 344, Absatz 1 - letzter Absatz**

EP 1 228 301 B1

**Beschreibung**

Die Erfindung betrifft ein Verfahren zum Überprüfen eines Abgaskatalysators einer Brennkraftmaschine gemäß dem Oberbegriff des Anspruches 1.

Zur Überwachung von Abgaskatalysatoren für Brennkraftmaschinen sind Verfahren bekannt, welche die Sauerstoffspeicherfähigkeit (Oxygen Storage Capacity, OSC-Verfahren) des Katalysators ausnutzen. Diese Speicherfähigkeit korreliert mit der Kohlenwasserstoff (HC)-Konvertierung im Katalysator. Wenn der Katalysator gute Konvertierungsfähigkeiten besitzt, werden die Lambdaschwankungen vor dem Katalysator, welche durch den Lambdaregler erzeugt und von einer ersten Lambdasonde erfasst werden, durch die Sauerstoffspeicherfähigkeit des Katalysators geglättet. Hat der Katalysator infolge Alterung, Vergiftung durch verbleiten Kraftstoff oder durch Verbrennungsaussetzer keine oder nur verminderte Konvertierungseigenschaften, so schlägt die stromauf des Katalysators vorhandene Regelschwingung auf die Lambdasonde stromab des Katalysators durch. Durch Vergleich der Signalamplituden der beiden Lambdasonden kann auf einen funktionsfähigen oder defekten Katalysator geschlossen werden (z.B. DE 23 28 459 A1).

Bei Fahrzeugen, die nach den strengen ULEV (Ultra Low Emission Vehicle) oder SULEV (Super Ultra Low Emission Vehicle)-Grenzwerten zertifiziert sind, führen schon Verschlechterungen der Konvertierungsrate von wenigen Prozent zu einer Überschreitung der Diagnosegrenzwerte. Bei diesen Konvertierungsraten werden jedoch relativ niedrige Amplitudenverhältnisse ermittelt. Damit ist eine sichere Unterscheidung zwischen einem defekten und einem funktionsfähigen Katalysator, insbesondere unter Berücksichtigung der Serienstreuung und der nicht linearen Korrelation zwischen Sauerstoffspeicherfähigkeit und HC-Konvertierung nicht mehr gegeben. Zudem wird in Zukunft auch eine Katalysatorüberwachung hinsichtlich des Ausstoßes von Stickoxiden (NOx) gefordert (siehe z.B. JP 3 073 839).

Ein NOx-Sensor bietet die Möglichkeit, aus gemessener NOx-Konzentration Rückschlüsse sowohl auf die HC-Konvertierungseigenschaften, als auch auf die NOx-Konvertierungseigenschaften eines Katalysators zu ziehen. In der deutschen Patentanmeldung DE 199 31 321 der Anmelderin ist ein Verfahren zum Überprüfen eines Dreiwege-Abgaskatalysators beschrieben, bei dem das Signal eines stromabwärts des Katalysators angeordneten NOx-Sensors während des Warmlaufs der Brennkraftmaschine ausgewertet wird. Hierzu wird ein Summenwert gebildet aus der gemessenen NOx-Konzentration ab Beginn des Starts der Brennkraftmaschine bis zu einem Zeitpunkt, bei dem die NOx-Konzentration einen vorgegebenen Schwellenwert unterschreitet und der Summenwert mit einem vorgegebenen Schwellenwert verglichen. Bei Überschreiten des Schwellenwertes wird auf einen gealterten Abgaskatalysator geschlossen. Dieses Verfahren beschreibt also eine Light-Off Diagnose des Katalysators.

Die Aufgabe der Erfindung besteht darin, ein genaues Verfahren zum Überprüfen der Konvertierungsfähigkeit eines Abgaskatalysators anzugeben, das ohne teuere Temperatursensoren und ohne eine zweite Lambdasonde auskommt und im stationären Betrieb der Brennkraftmaschine zuverlässige Ergebnisse liefert.

Diese Aufgabe wird durch die Merkmale des Patentanspruches 1 gelöst.

Vorliegender Erfindung liegt die Idee zugrunde, zur Überprüfung eines Abgaskatalysators einen NOx-Sensor zur Bestimmung der NOx-Konzentration während des Stationärbetriebes der Brennkraftmaschine stromabwärts des zu diagnostizierenden Abgaskatalysators einzusetzen.

Dabei wird mit Hilfe einer Lambdaregelungseinrichtung, welche eine stromaufwärts des Abgaskatalysators angeordnete Breitband-Lambdasonde aufweist und das Luft-/Kraftstoffverhältnis auf einen vorgebbbaren Sollwert regelt, im stationären Betrieb bei betriebswarmer Brennkraftmaschine durch einen Regeleingriff der Lambdaregelungeinrichtung die Sauerstoffbeladung des Abgaskatalysators während einer Diagnosezeit bis zu einem vorgegebenen Wert erhöht. Während der Diagnosezeit wird dann die NOx-Konzentration im Abgaskanal stromabwärts des Dreiwege-Abgaskatalysators mittels des NOx-Sensors erfasst und aus den Werten der NOx-Konzentration während mindestens einer Lambdareglerschwingung ein stationärer Diagnosewert ermittelt. Der Diagnosewert wird mit einem vorgegebenen Schwellenwert verglichen und bei Überschreiten des Schwellenwertes auf einen gealterten Abgaskatalysator geschlossen.

Um die Genauigkeit der Diagnose zu erhöhen, ist es vorteilhaft, nicht nur eine Reglerschwingung, sondern mehrere auszuwerten und dann den Mittelwert zu bilden.

Dabei können beide Halbwellen der Lambdareglerschwingung, oder nur die positive Halbwelle ("magere Halbwelle") während der das Signal der Lambdasonde ein mageres Luft/Kraftstoffgemisch anzeigt, ausgewertet werden.

Das Verfahren hat insbesondere den Vorteil, daß es auch die Diagnose von Katalysatoren mit hoher Genauigkeit erlaubt, selbst wenn strenge Abgasgrenzwerte einzuhalten sind.

Weitere vorteilhafte Ausgestaltungen der Erfindung werden nachfolgend unter Bezugnahme auf die Zeichnung näher erläutert. Es zeigen:

Figur 1   ein Blockschaltbild einer Brennkraftmaschine mit zugehöriger Abgasnachbehandlungsanlage,

Figur 2   Diagramme für den zeitlichen Verlauf des Ausgangssignals der Lambdasonde stromaufwärts des Katalysators und des NOx-Sensors stromabwärts des Katalysators bei Auswertung beider Halbwellen der Lambdareglerschwingung und

Figur 3    Diagramme für den zeitlichen Verlauf des Ausgangssignals der Lambdasonde stromaufwärts des Katalysators und des NOx-Sensors stromabwärts des Katalysators bei Auswertung nur einer Halbwelle der Lambdareglerschwingung.

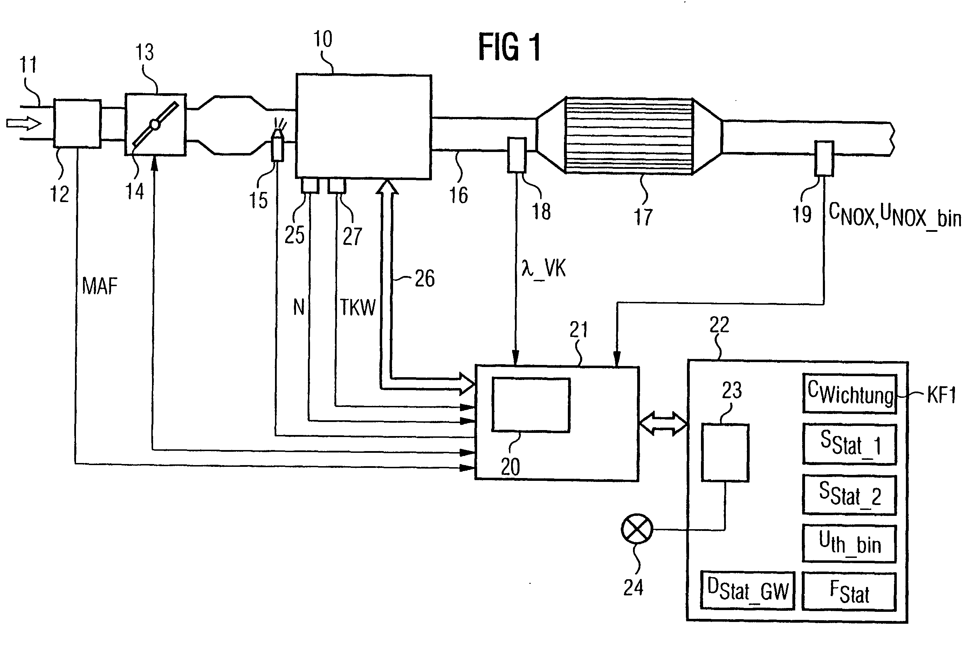

In Figur 1 ist in Form eines Blockschaltbildes sehr vereinfacht eine Brennkraftmaschine mit einer ihr zugeordneten Abgasnachbehandlungsanlage gezeigt, bei der das erfindungsgemäße Verfahren angewendet wird. Dabei sind nur diejenigen Komponenten dargestellt, die für das Verständnis der Erfindung notwendig sind. Insbesondere ist auf die Darstellung des Kraftstoffkreislaufes verzichtet worden.

Der Brennkraftmaschine 10 wird über einen Ansaugkanal 11 die zur Verbrennung notwendige Luft zugeführt. Im Ansaugkanal 11 sind in Strömungsrichtung der angesaugten Luft gesehen nacheinander ein Lastsensor in Form eines Luftmassenmessers 12, ein Drosselklappenblock 13 mit einer Drosselklappe 14 und entsprechend der Zylinderzahl ein Satz Einspritzventile 15 vorgesehen, von denen nur eines gezeigt ist. Das erfindungsgemäße Verfahren ist aber auch bei einem System anwendbar, das nur ein Einspritzventil für alle Zylinder aufweist (Zentraleinspritzsystem, Single Point Injection System) oder bei dem Kraftstoff direkt in die jeweiligen Zylinder eingespritzt wird (Direkteinspritzung, Hochdruckeinspritzung).

Ausgangsseitig ist die Brennkraftmaschine 10 mit einem Abgaskanal 16 verbunden, in dem ein Abgaskatalysator 17 angeordnet ist. Dabei kann es sich um eine beliebige Art von Abgaskatalysator handeln, der eine Sauerstoffspeicherfähigkeit aufweist, insbesondere kann ein Dreiwege-Katalysator oder ein NOx-Speicherkatalysator vorgesehen sein. Im letzteren Falle soll dann ein dem NOx-Speicherkatalysator vorgeschalteter Katalysator keine Sauerstoffspeicherfähigkeit aufweisen.

Die Sensorik für die Abgasnachbehandlung beinhaltet u.a. einen stromaufwärts des Abgaskatalysators 17 angeordneten Sauerstoffmeßaufnehmer in Form einer Lambdasonde 18 und einen stromabwärts des Abgaskatalysators angeordneten NOx-Sensor 19. Dieser NOx-Sensor 19 bekannter Art liefert ein Ausgangssignal $c_{NOx}$, das mit der NOx-Konzentration im Abgas korreliert und ein binäres Ausgangssignal $U_{NOx\_bin}$, das anzeigt, ob ein gegenüber dem stöchiometrischen Luft-/Kraftstoffverhältnis mageres oder fettes Gemisch vorliegt. Als Sauerstoffmeßaufnehmer 18 wird eine sogenannte Breitband-Lambdasonde (lineare Lambdasonde) eingesetzt, welche in Abhängigkeit des Sauerstoffgehaltes im Abgas im Bereich um Lambda = 1 ein stetiges, z.B. lineares Ausgangssignal abgibt. Mit dem Signal dieser Lambdasonde 18 wird das Gemisch entsprechend der Sollwertvorgaben geregelt. Diese Funktion übernimmt eine an sich bekannte Lambdaregelungseinrichtung 20, die vorzugsweise in eine den Betrieb der Brennkraftmaschine steuernde bzw. regelnde Steuerungseinrichtung 21 integriert ist. Solche elektronischen Steuerungseinrichtungen 21, die in der Regel einen oder mehrere Mikroprozessoren beinhalten und die neben der Kraftstoffeinspritzung und der Zündungsregelung noch eine Vielzahl weiterer Steuer-und Regelaufgaben, u.a. auch die Überprüfung des Abgasnachbehandlungssystems übernehmen, sind an sich bekannt, so daß im folgenden nur auf den im Zusammmenhang mit der Erfindung relevanten Aufbau und dessen Funktionsweise eingegangen wird. Insbesondere ist die Steuerungseinrichtung 21 mit einer Speichereinrichtung 22 verbunden, in der u.a. verschiedene Kennfelder und Schwellenwerte gespeichert sind, deren jeweilige Bedeutung anhand der Beschreibung der nachfolgenden Figuren noch näher erläutert wird.

Die Speichereinrichtung 22 umfasst ferner einen Fehlerspeicher 23, dem eine Fehleranzeigevorrichtung 24 zugeordnet ist. Diese Fehleranzeigevorrichtung 24 ist vorzugsweise als Fehlerlampe (MIL, malfunction indication lamp) realisiert, die am Armaturenbrett des Fahrzeuges angeordnet ist und dessen Aufleuchten eine Fehlfunktion einer abgasrelevanten Komponente anzeigt.

Die Drehzahl N der Brennkraftmaschine 10 wird mit Hilfe eines Drehzahlsensors 25, die Temperatur der Brennkraftmaschine 10 wird über die Temperatur des Kühlmittels TKW mittels eines Temperatursensors 27 erfasst. Diese Signale werden ebenso der Steuerungseinrichtung 21 zur weiteren Verarbeitung zugeführt, wie das Ausgangssignal MAF des Luftmassenmessers, das Signal $\lambda\_VK$ der Lambdasonde 18 und die Ausgangssignale $C_{NOx}$ und $U_{nox\_bin}$ des Nox-Sensors 19. Die letztgenannten Signale werden bevorzugt über eine Busleitung (z.B. CAN) übertragen.

Zur Steuerung und Regelung der Brennkraftmaschine 10 ist die Steuerungseinrichtung 21 über eine Daten- und Steuerleitung 26 noch mit weiteren, nicht explizit dargestellten Sensoren und Aktoren verbunden.

Ist die Lambdaregelung bei betriebswarmer Brennkraftmaschine aktiv ($0{,}997 \leq \lambda \geq 0{,}999$), so wird in quasistationären Betriebszuständen eine Diagnose durchgeführt. Auf einen quasistationären Zustand wird z.B. geschlossen, wenn die Kühlmitteltemperatur TKW einen vorgegebenen Schwellenwert erreicht hat und ein bestimmter Luftmassenstrom MAF innerhalb vorgegebener Grenzen liegt. Hierzu werden das Signal des Temperatursensors 27 und das des Luftmassenmessers 12 ausgewertet.

Mit Hilfe der linearen Lambdaregelung wird für eine bestimmte Diagnosezeit, die ein Vielfaches einer Lambdareglerschwingung beträgt, eine Lambdavariation um λ = 1 derart durchgeführt, daß sich die Sauerstoffbeladung des Abgaskatalysators 17 auf einen vorbestimmten Wert erhöht. Dieser Wert ergibt sich als diejenige Sauerstoffbeladung, bei der sich für einen neuen Katalysator oder definitionsgemäß einen OBD (On Board Diagnose)-Grenzkatalysator, der als noch funktionsfähig eingestuft wird, noch kein Anstieg der NOx-Konzentration stromabwärts des Abgaskatalysators bemerkbar macht. Der experimentell durch Versuche ermittelte Wert $D_{Stat\_GW}$ ist in der Speichereinrichtung 22 abgelegt. Ein gealterter Abgaskatalysator zeigt bei gleicher Sauerstoffbeladung aufgrund von vermindertem Sauerstoffspeichervermögen ein deutlich erhöhtes NOx-Sensorsignal.

Zum Zwecke der Diagnose wird also die Beladung des Abgaskatalysators mit Sauerstoff durch einen Eingriff in die Lambdaregelung mittels der linearen Lambdasonde 18 (Regelsonde) erhöht, beispielsweise auf einen Wert von λ = 0,998 geregelt. Dadurch wird das Katalysatorfenster, also der Bereich mit größtmöglicher Umwandlungsrate der Schadstoffe nicht verlassen. Es wird lediglich eine größere Sauerstoffbeladung gewählt als für den normalen Betrieb, um eine bessere Unterscheidung bei der Diagnose zwischen einem noch funktionsfähigen und einem nicht mehr tolerierbaren, da gealterten Abgaskatalysator zu treffen. Im Gegensatz zur Lambdaregelung mit einer binären Lambdasonde, bei der die maximale Frequenz über die Totzeit des Systems vorgegeben ist und die Amplitude der Schwingung über die P-Sprung-Verzögerungszeit sowie über den I-Anteil des Reglers einstellbar ist, hat man bei der Verwendung der linearen Lambdaregelung den Vorteil, die Sauerstoffbeladung des Katalysators frei einzustellen. Da die Diagnose bei einem bestimmten Luftmassenstrom und bei einer bestimmten Einstellung der Lambdareglerparameter, d.h. der Amplitude und der Frequenz der Reglerschwingung erfolgt, erhält man eine Sauerstoffbeladung, die reproduzierbar ist. Dies ist Voraussetzung für ein genaues Diagnoseergebnis.

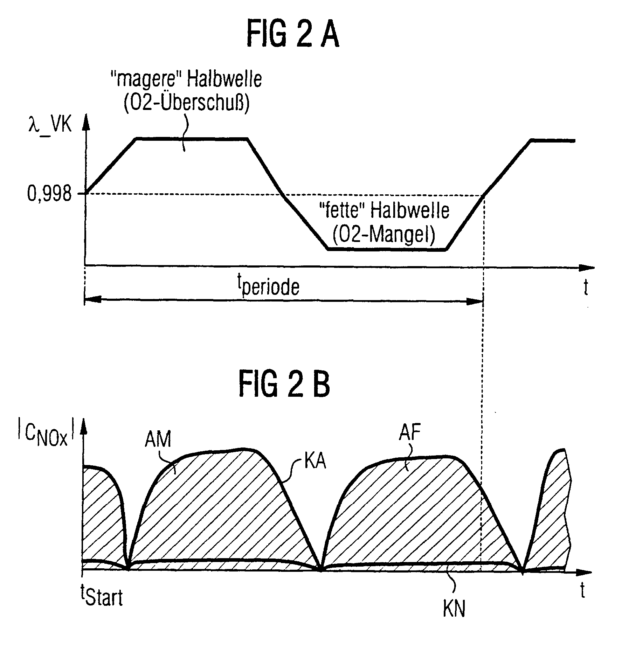

Anhand der Figur 2 wird ein erstes Ausführungsbeispiel des Diagnoseverfahrens erläutert. Die Figur 2a) zeigt während einer Periodendauer $t_{Periode}$ der Lambdareglerschwingung den zeitlichen Verlauf des Signales λ_VK, wie es von der Lambdasonde 18 stromaufwärts des Katalysators 17 geliefert wird. Der Sollwert für die Luftzahl λ ist dabei auf den bereits oben genannten Wert von 0,998 eingestellt. Die oberhalb dieses Wertes liegende Halbwelle der Schwingung ist als "magere Halbwelle", die unterhalb des Wertes liegende Halbwelle als "fette Halbwelle" bezeichnet. Während der mageren Halbwelle herrscht Sauerstoffüberschuß, während der fetten Halbwelle herrscht Sauerstoffmangel vor. Die Zeitdauer für eine vollständige Schwingung, bestehend aus der mageren und der fetten Halbwelle ist mit $t_{Periode}$ bezeichnet.

Die Figur 2b) zeigt als Kurve KA den zeitlichen Verlauf des Ausgangssignals $C\_{NOx}$ des NOx-Sensors 19, der sich als Folge des gewählten Lambdawertes einstellt für einen gealterten Katalysator, die Kurve KN den zeitlichen Verlauf für einen neuen Katalysator mit uneingeschränkter Konvertierungseigenschaft. Bei dieser Darstellung ist anzumerken, daß der Betrag des um einen Offset bereinigte Signal $C\_{Nox}$ des NOx-Sensors 19 aufgetragen ist. Die schraffierte Fläche, die von der Kurve KA und der Abszisse begrenzt wird, ist mit AM bezeichnet und kennzeichnet den Integralwert während der mageren Halbwelle eines gealterten Abgaskatalysators, während die Fläche zwischen der Kurve KN und der Abszisse den Integralwert während der mageren Halbwelle eines neuen Abgaskatalysators bezeichnet. Diese Fläche ist deutlich kleiner. Die schraffierte Fläche AF, die von der Kurve KA und der Abszisse begrenzt wird, kennzeichnet den Integralwert während der fetten Halbwelle eines gealterten Abgaskatalysators. Auch hier ist für einen neuen Abgaskatalysator die Fläche, die in der fetten Halbwelle von der Kurve KN und der Abszisse begrenzt wird deutlich kleiner. Ab Start der Diagnose zum Zeitpunkt $t_{Start}$ wird während der Variation der Sauerstoffbeladung das Sensorsignal $C\_{NOx}$ während beider Halbwellen ausgewertet.

Im folgenden ist angegeben, wie bei diesem Ausführungsbeispiel ein stationärer Diagnosewert $D_{Stat}$ berechnet wird.

$$D_{Stat} = \frac{1}{n_{Perioden}} \int_{t_{Start}}^{t_{Start} + n_{Perioden} \cdot t_{Periode}} \left| c_{NOx}(t) \right| \cdot c_{Wichtung}(MAF, N) \cdot dt$$

mit

| | |
|---|---|
| $n_{Perioden}$ | Anzahl komplette Perioden Lambdaregler |
| $t_{Periode}$ | Periodendauer vollständige Lambdareglerschwingung |
| $t_{Start}$ | Start Diagnose |
| $c_{NOx}$ | NOx - Konzentration (Offset bereinigt) |
| $c_{Wichtung}$ | Wichtungsfaktor |

Die mittels des NOx-Sensors 19 gemessene NOx-Konzentration $c_{NOx}(t)$ wird zur Berechnung des Diagnosewertes $D_{Stat}$ mittels eines Wichtungsfaktors $c_{Wichtung}$ abhängig vom Luftmassenstrom MAF und der Drehzahl N gewichtet. Der Wichtungsfaktor $c_{Wichtung}$ ist in einem Kennfeld KF1 der Speichereinrichtung 22 abgelegt.

Der Integrationswert $D_{Stat}$ für einen gealterten Abgaskatalysator, ist aufgrund der verminderten Konvertierungsfähigkeit größer als für einen neuwertigen Katalysator. Der Diagnosewert $D_{Stat}$ wird mit einem Schwellenwert $S_{Stat\_1}$ verglichen. Das Überschreiten des Schwellenwertes $S_{Stat\_1}$ S1, der für einen OBD-Grenzkatalysator experimentell auf dem Prüfstand durch Abgastests ermittelt wird und in der Speichereinrichtung 22 abgelegt ist, führt zur Aktivierung der Fehleranzeigevorrichtung 24. Parallel hierzu kann das Überschreiten des Schwellenwertes in einen Fehlerspeicher 23 eingetragen werden, dessen Inhalt beim nächsten Werkstattaufenthalt des Fahrzeuges ausgelesen wird und eine entsprechende Reparatur oder ein Austausch des Katalysators vorgenommen werden kann.

Es ist bekannt, daß der NOx-Sensor eine Querempfindlichkeit bei einem fetten Luft-/Kraftstoffgemisch aufweist. Somit mißt der NOx-Sensor 19 bei einem fetten Luft-/Kraftstoffgemisch nicht nur die Abgaskomponemte NOx, sondern auch die Abgaskomponente HC. Da aber auch in dem NOX-Sensorsignal in der "fetten Halbwelle" Informationen über die Konvertierungseigenschaften des Abgaskatalysators enthalten sind (je mehr HC-Anteil stromabwärts des Katalysators vorhanden ist, desto geringer ist auch der Konvertierungsgrad des Abgaskatalysators), können beide Halbwellen ausgewertet werden, wie es oben beschrieben wurde.

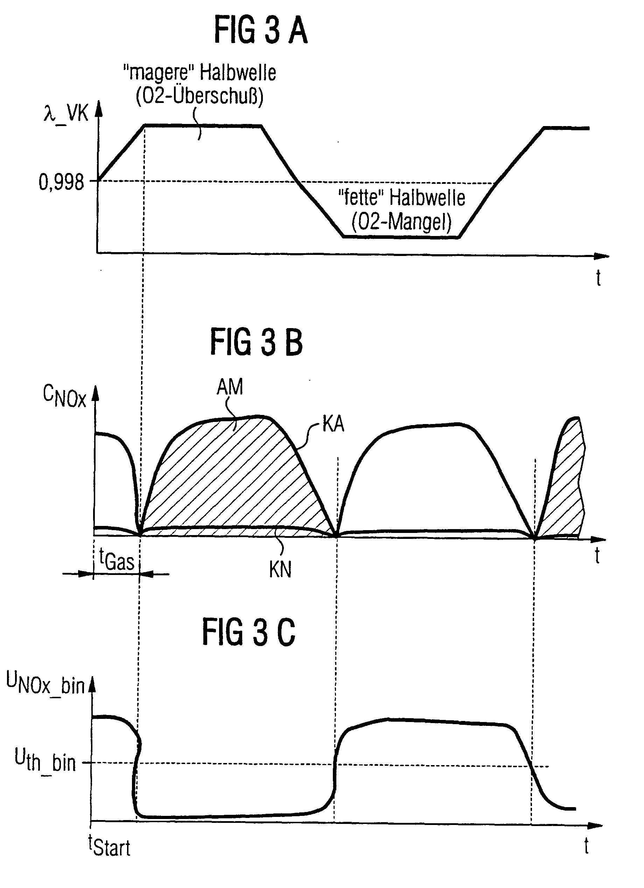

Die bestmögliche Korrelation zwischen NOx-Sensorsignal stromabwärts des Abgaskatalysators und der NOx-Konzentration erhält man aber, wenn man das Sensorsignal während der mageren Halbwelle auswertet und das Sensorsignal während der fetten Halbwelle unterdrückt. Deshalb gehen bei dem Ausführungsbeispiel, wie es anhand der Figur 3 beschrieben wird, in die Berechnung des Diagnosewertes lediglich die Werte ein, die bei der jeweiligen mageren Halbwellen ermittelz werden.

Die Figuren 3a) und 3b) mit ihren Bezugszeichen entsprechen dabei den Figuren 2a) und 2b) mit der Einschränkung, daß die fette Halbwelle nicht berücksichtigt wird. Bei der Zuordnung der mageren Halbwelle des Signals λ_VK zum jeweiligen NOx-Sensorsignal $C_{\_NOX}$ muß die Gaslaufzeit $t_{Gas}$ berücksichtigt werden. Dies geschieht mittels des Binärsignals $U_{NOx\_bin}$ des NOx-Sensors 19. Dieses, in Figur 3c) dargestellte Signal $U_{NOx\_bin}$ verhält sich analog zu dem Signal einer binären Lambdasonde. Aus dem Verlauf des Binärsignals $U_{NOx\_bin}$ erkennt man, ob das Luft-/Kraftstoffgemisch mager oder fett ist. Wird ein Wert für $U_{NOx\_bin}$ kleiner als ein Schwellenwert $U_{th\_bin}$ (typischerweise 600mV) detektiert, so kann das gemessene NOx Sensorsignal $C_{\_NOx}$ einer mageren Halbwelle der Zwangsanregung zugeordnet werden und geht damit in die Bestimmung des Diagnosewertes ein. Andernfalls liegt ein fettes Luft/Kraftstoffgemisch vor und das Signal $C_{\_NOx}$ des NOx-Sensors wird nicht zur Diagnose des Abgaskatalysators herangezogen.

Die Berechnung des Diagnosewertes erfolgt in diesem Ausführungsbeispiel nach folgende Gleichung:

$$D_{Stat} = \frac{1}{n_{Perioden}} \int\limits_{t_{Start}}^{t_{Start}+n_{Perioden}\cdot t_{Periode}} c_{Nox}(t) \cdot c_{Wichtung}(MAF,N) \cdot \theta\big[U_{th\_bin} - U_{nox\_bin}(t)\big]dt$$

*wobei*

| | |
|---|---|
| $n_{Perioden}$ | Anzahl komplette Perioden Lambdaregler |
| $t_{Periode}$ | Periodendauer vollständige Lambdareglerschwingung |
| $t_{Start}$ | Start Diagnose |
| $c_{NOx}$ | NOx Konzentration (Offset bereinigt) |
| $c_{Wichtung}$ | Wichtungsfaktor |
| $U_{th\_bin}$ | Magerschwelle Binärsignal des NOx - Sensors |
| $U_{nox\_bin}$ | Binärsigna NOx - Sensor |

$$\theta(x) = \begin{cases} 1 \text{ für } x \geq 0 \\ 0 \text{ für } x < 0 \end{cases} \text{(Heaviside Funktion)}$$

Durch die Heaviside Funktion wird das NOx-Sensor Signal nur für magere Halbwellen ausgewertet. Die gemessene NOx-Konzentration $c_{NOx}(t)$ wird dabei abhängig vom Luftmassenstrom MAF und Drehzahl N mittels des Wichtungsfaktors $c_{Wichtung}$ der abhängig von dem Luftmassenstrom MAF und der Drehzahl N in dem Kennfeld KF1 der Speichereinrichtung 22 abgelegt ist, gewichtet.

Der Integrationswert $D_{Stat}$ für einen gealterten Abgaskatalysator, ist aufgrund der verminderten Konvertierungsfähigkeit größer als für einen neuwertigen Abgaskatalysator. Der Diagnosewert $D_{Stat}$ wird mit einem Schwellenwert $S_{Stat\_2}$ verglichen. Das Überschreiten des Schwellenwertes $S_{Stat\_2}$, der für einen OBD-Grenzkatalysator experimentell auf dem Prüfstand durch Abgastests ermittelt wird und in der Speichereinrichtung 22 abgelegt ist, führt zur Aktivierung der Fehleranzeigevorrichtung 24. Parallel hierzu kann das Überschreiten des Schwellenwertes in einen Fehlerspeicher 23 eingetragen werden, dessen Inhalt beim nächsten Werkstattaufenthalt des Fahrzeuges ausgelesen wird und eine entsprechende Reparatur oder ein Austausch des Katalysators vorgenommen werden kann.

Es ist auch möglich, ein beliebiges Verfahren zur Light-Off-Diagnose des Katalysators während es Warmlaufs der Brennkraftmaschine mit dem erfindungsgemäßen Verfahren zur Diagnose bei betriebswarmer Brennkraftmaschine zu kombinieren. Im folgenden wird gezeigt, wie aus der Diagnose während des Light-Off und der Diagnose bei betriebswarmen Motor ein Gesamtdiagnosewert gebildet werden kann.

Wird mit $D_{Light-off}$ der Diagnosewert eines bekannten Diagnoseverfahrens während des Warmlaufs der Brennkraftmaschine und mit $S_{Light-off}$ die Diagnoseschwelle eines solchen Verfahrens, wie es beispielsweise in der eingangs genannten DE 199 31 321 der Anmelderin beschrieben ist, bezeichnet, so kann unter Heranziehen des Diagnosewertes $D_{Stat}$ und des Diagnoseschwellenwertes $S_{Stat}$ im quasistationärem Betrieb durch Summenbildung der jeweiligen Quotienten aus Diagnosewert und Schwellenwert ein Gesamtdiagnosewert $D_{Gesamt}$ gebildet werden:

$$\frac{D_{Light-Off}}{S_{Light-Off}} \cdot F_{Light-Off} + \frac{D_{Stat}}{S_{Stat}} \cdot F_{Stat} = D_{Gesamt}$$

$S_{Stat}$ ist dabei der Diagnoseschwellenwert, $D_{Stat}$ der Diagnosewert für eines der beschriebenen Diagnoseverfahren bei betriebswarmer Brennkraftmaschine.

Überschreitet der Gesamtdiagnosewert $D_{Gesamt}$ den Wert 1, so wird die Fehleranzeigevorrichtung 24 aktiviert. Über die Wichtungsfaktoren $F_{Light-Off}$ und $F_{Stat}$ können die einzelnen Betriebsphasen bei der Diagnose unterschiedlich gewichtet werden. Dies ist nötig, da während des Light-Off bis zu 70% der Gesamtemission eines Abgastests entstehen und zudem eine Diagnose während des Ligh-Off mit größeren Ungenauigkeiten behaftet ist, als bei betriebswarmer Brennkraftmaschine bei quasistationären Bedingungen. Für die Wichtungsfaktoren $F_{Light-off}$ und $F_{Stat}$ gilt folgende Beziehung:

$$F_{Stat} + F_{Light-Off} = 1$$

**Patentansprüche**

1. Verfahren zum Überprüfen der Konvertierungsfähigkeit eines in einem Abgaskanal (16) einer Brennkraftmaschine (10) angeordneten Abgaskatalysators (17) mit einer Lambdaregelungseinrichtung (20), welche eine stromaufwärts des Abgaskatalysators (17) angeordnete Breitband-Lambdasonde (18) aufweist und das Luft-/Kraftstoffverhältnis auf einen vorgebbbaren Sollwert regelt,
   **dadurch gekennzeichnet, daß**

   - im stationären Betrieb bei betriebswarmer Brennkraftmaschine (10) durch einen Regeleingriff der Lambdaregelungeinrichtung (20) die Sauerstoffbeladung des Abgaskatatalysators (19) während einer Diagnosezeit ($n_{Perioden} \cdot t_{Periode}$) bis zu einem vorgegebenen Wert ($D_{stat\_GW}$) erhöht wird,
   - während der Diagnosezeit ($n_{Perioden} \cdot t_{Periode}$) die NOx-Konzentration im Abgaskanal (16) stromabwärts des Dreiwege-Abgaskatalysators (17) mittels eines NOx-Sensors (19) erfasst wird,
   - aus den Werten der NOx-Konzentration (c_NOx) während mindestens einer Lambdareglerschwingung ein stationärer Diagnosewert ($D_{Stat}$) ermittelt wird,
   - der Diagnosewert ($D_{Stat}$) mit einem vorgegebenen Schwellenwert ($S_{Stat\_1}$) verglichen wird und
   - bei Überschreiten des Schwellenwertes ($S_{Stat\_1}$) auf einen gealterten Abgaskatalysator (17) geschlossen wird.

2. Verfahren nach Anspruch 1, **dadurch gekennzeichnet, daß** eine vorgegebene Anzahl ($n_{Perioden}$) Lambdareglerschwingungen ausgewertet werden.

3. Verfahren nach Anspruch 1 oder 2, **dadurch gekennzeichnet, daß** sowohl die positive Halbwelle der Lambdareglerschwingung, während der das Signal ($\lambda\_VK$) der Lambdasonde ein mageres Luft-/Kraftstoffgemisch anzeigt, als auch die negative Halbwelle, während der das Signal (λ_VK) der Lambdasonde ein fettes Luft-/Kraftstoffgemisch anzeigt, ausgewertet werden.

4. Verfahren nach Anspruch 1 oder 2, **dadurch gekennzeichnet, daß** nur die positive Halbwelle der Lambdareglerschwingung, während der das Signal (λ_VK) der Lambdasonde ein mageres Luft-/Kraftstoffgemisch anzeigt ausgewertet wird.

5. Verfahren nach Anspruch 1 und 3, **dadurch gekennzeichnet, daß** der Diagnosewert ($D_{Stat}$) nach folgender Be-ziehung ermitelt wird:

$$D_{Stat} = \frac{1}{n_{Perioden}} \int_{t_{Start}}^{t_{Start}+n_{Perioden}\cdot t_{Periode}} \left| c_{NOx}(t) \right| \cdot c_{Wichtung}(MAF, N) \cdot dt$$

mit

| | |
|---|---|
| $n_{Pertoden}$ | Anzahl komplette Perioden Lambdaregler |
| $t_{Periode}$ | Periodendauer vollständige Lambdareglerschwingung |
| $t_{Start}$ | Start Diagnose |
| $c_{Nox}$ | NOx - Konzentration (Offset bereinigt) |
| $c_{Wichtung}$ | Wichturigsfaktor |
| MAF | Luftmassenstrom |
| N | Drehzahl |

6. Verfahren nach Anspruch 1 und 4, **dadurch gekennzeichnet, daß** der Diagnosewert ($D_{Stat}$) nach folgender Be-ziehung ermitelt wird:

$$D_{Stat} = \frac{1}{n_{Perioden}} \int_{t_{Start}}^{t_{Start}+n_{Perioden}\cdot t_{Periode}} c_{Nox}(t) \cdot c_{Wichtung}(MAF, N) \cdot \theta\left[U_{th\_bin} - U_{nox\_bin}(t)\right] dt$$

wobei

| | |
|---|---|
| $n_{Perioden}$ | Anzahl komplette Perioden Lambdaregler |
| $t_{Periode}$ | Periodendauer vollständige Lambdareglerschwingung |
| $t_{Start}$ | Start Diagnose |
| $c_{NOx}$ | NOx Konzentration (Offset bereinigt) |
| $c_{Wichtung}$ | Wichturigsfaktor |
| $U_{th\_bin}$ | Magerschwelle Binärsignal des NOx - Sensors |
| $U_{nox\_bin}$ | Binärsignal NOx - Sensor |

$$\theta(x) = \begin{cases} 1 \text{ für } x \geq 0 \\ 0 \text{ für } x < 0 \end{cases} \quad \text{(Heaviside Funktion)}$$

| | |
|---|---|
| MAF | Luftmassenstrom |
| N | Drehzahl |

7. Verfahren nach Anspruch 1, **dadurch gekennzeichnet, daß** als Wert ($D_{stat\_GW}$) diejenige Sauerstoffbeladung herangezogen wird, bei der sich für einen neuen Abgaskatalysator oder einen Grenzkatalysator, der gerade noch als funktionstüchtig eingestuft wird, noch kein Anstieg der NOx-Konzentration stromabwärts des Abgaskatalysators bemerkbar macht.

8. Verfahren nach Anspruch 7, **dadurch gekennzeichnet, daß** der Wert ($D_{Stat\_GW}$) experimentell ermittelt wird und in einer Speichereinrichtung (22) einer die Brennkraftmaschine (10) steuernden Steuereinrichtung (21) abgelegt ist.

**9.** Verfahren nach Anspruch 1, **dadurch gekennzeichnet, daß** der Diagnosewert ($D_{stat}$) für den Stationärbetrieb der Brennkraftmaschine (10) mit einem Diagnosewert ($D_{Light-off}$) während des Warmlaufs der Brennkraftmaschine (10) zu einem Gesamtdiagnosewert ($D_{Gesamt}$) verknüpft wird.

**10.** Verfahren nach Anspruch 9, **dadurch gekennzeichnet, daß** der Gesamtdiagnosewert ($D_{Gesamt}$) nach folgender Beziehung gebildet wird:

$$\frac{D_{Light\text{-}Off}}{S_{Light\text{-}Off}} \cdot F_{Light\text{-}Off} + \frac{D_{Stat}}{S_{Stat}} \cdot F_{Stat} = D_{Gesamt}$$

mit

$D_{Light\text{-}off} =$      Diagnosewert eines bekannten Diagnoseverfahrens während des Warmlaufs der Brennkraft-maschine,

$S_{Light\text{-}off} =$      Diagnoseschwelle eines solchen Verfahrens

$F_{Light\text{-}Off}$ , $F_{Stat} =$      Wichtungsfaktoren

$S_{tat} =$      Diagnoseschwellenwert

**11.** Verfahren nach Anspruch 10, **dadurch gekennzeichnet, daß** der Gesamtdiagnosewert ($D_{Gesamt}$) mit einem Schwellenwert verglichen wird und bei Überschreiten des Schwellenwertes eine Fehleranzeigevorrichtung (24) aktiviert wird.

## Claims

**1.** Method for monitoring the conversion capacity of an exhaust-gas catalytic converter (17) which is arranged in an exhaust pipe (16) of an internal combustion engine (10) and has a lambda control device (20), which has a wide-band lambda sensor (18) arranged upstream of the exhaust-gas catalytic converter (17) and controls the air/fuel ratio to a predeterminable set value,
**characterized in that**

- in steady-state operation, with the internal combustion engine (10) at operating temperature, the oxygen loading of the exhaust-gas catalytic converter (19) is increased to a predetermined value ($D_{stat\_GW}$) during a diagnosis time ($n_{period\eta} \cdot t_{period}$) by a control intervention of the lambda control device (20),
- during the diagnosis time ($n_{period\eta} \cdot t_{period}$) the $NO_x$ concentration in the exhaust pipe (16) downstream of the three-way exhaust-gas catalytic converter (17) is recorded by means of an $NO_x$ sensor (19),
- a steady-state diagnosis value ($D_{stat}$) is determined from the values of the $NO_x$ concentration ($c\_NO_x$) during at least one lambda controller oscillation,
- the diagnosis value ($D_{stat}$) is compared with a predetermined threshold value ($S_{stat\_1}$), and
- if the threshold value ($S_{stat\_1}$) is exceeded, it is concluded that the exhaust-gas catalytic converter (17) has aged.

**2.** Method according to Claim 1, **characterized in that** a predetermined number ($n_{period\eta}$) of lambda controller oscillations are evaluated.

**3.** Method according to Claim 1 or 2, **characterized in that** both the positive half-wave of the lambda controller oscillation, during which the signal ($\lambda\_VK$) from the lambda sensor indicates a lean air/fuel mix, and the negative half-wave, during which the signal ($\lambda\_VK$) from the lambda sensor indicates a rich air/fuel mix, are evaluated.

**4.** Method according to Claim 1 or 2, **characterized in that** only the positive half-wave of the lambda controller oscillation, during which the signal ($\lambda\_VK$) from the lambda sensor indicates a lean air/fuel mix, is evaluated.

**5.** Method according to Claims 1 and 3, **characterized in that** the diagnosis value ($D_{stat}$) is determined according to the following relationship:

$$D_{stat} = \frac{1}{n_{periods}} \int_{t_{start}}^{t_{start} + n_{periods} \cdot t_{period}} |c_{NOx}(t)| \cdot c_{weighting}(MAF, N) \cdot dt$$

where

$n_{periods}$ is the number of complete periods of the lambda controller

$t_{period}$ is the period time of a complete lambda controller oscillation

$t_{start}$ is the start of diagnosis

$C_{NOx}$ is the $NO_x$ concentration (offset eliminated)

$C_{weighting}$ is the weighting factor

MAF is the air mass flow

N is the rotational speed.

**6.** Method according to Claims 1 and 4, **characterized in that** the diagnosis value ($D_{stat}$) is determined according to the following relationship:

$$D_{stat} = \frac{1}{n_{periods}} \int_{t_{start}}^{t_{start} + n_{periods} \cdot t_{period}} c_{Nox}(t) \cdot c_{weighting}(MAF, N) \cdot \theta[U_{th\_bin} - U_{nox\_bin}(t)] dt$$

where

$n_{periods}$ is the number of complete periods of the lambda controller

$t_{period}$ is the period time of a complete lambda controller oscillation

$t_{start}$ is the start of diagnosis

$C_{NOX}$ is the $NO_X$ concentration (offset eliminated)

$C_{weighting}$ is the weighting factor

$U_{th\_bin}$ is the lean threshold for the binary signal of the $NO_x$ sensor

$U_{nox\_bin}$ is the binary signal from the $NO_x$ sensor

$$\phi(x) = \begin{cases} 1 & \text{for } x \geq 0 \\ 0 & \text{for } x < 0 \end{cases} \quad \text{(Heaviside function)}$$

MAF is the air mass flow

N is the rotational speed.

**7.** Method according to Claim 1, **characterized in that** the oxygen loading at which there is as yet no noticeable rise in the $NO_x$ concentration downstream of the exhaust-gas catalytic converter for a new exhaust-gas catalytic converter or a limit catalytic converter which is just still classified as functional is used as value ($D_{stat\_Gw}$).

**8.** Method according to Claim 7, **characterized in that** the value ($D_{stat\_GW}$) is determined experimentally and is stored in a memory device (22) of a control device (21) which controls the internal combustion engine (10).

**9.** Method according to Claim 1, **characterized in that** the diagnosis value ($D_{stat}$) for steady-state operation of the internal combustion engine (10) is linked to a diagnosis value ($D_{light-off}$) while the internal combustion engine (10) is warming up, to form a total diagnosis value ($D_{total}$).

**10.** Method according to Claim 9, **characterized in that** the total diagnosis value ($D_{total}$) is formed according to the following relationship:

$$\frac{D_{light-off}}{S_{light-off}} \cdot F_{light-off} + \frac{D_{stat}}{S_{stat}} \cdot F_{stat} = D_{total}$$

where

$D_{light\text{-}off}$ = Diagnosis value for a known diagnosis method while the internal combustion engine is warming up,
$S_{light\text{-}off}$ = Diagnosis threshold for a method of this type
$F_{light\text{-}off}$, $F_{stat}$ = weighting factors
Stat = diagnostic threshold value.

**11.** Method according to Claim 10, **characterized in that** the total diagnosis value ($D_{total}$) is compared with a threshold value, and a fault indicator device (24) is activated when the threshold value is exceeded.

## Revendications

**1.** Procédé pour contrôler la capacité de conversion d'un pot catalytique de gaz d'échappement (17) disposé dans un canal des gaz d'échappement (16) d'un moteur à combustion interne (10), avec un dispositif de régulation de lambda (20), qui présente une sonde lambda à large bande (18) disposée en amont du pot catalytique de gaz d'échappement (17) et qui régule le rapport air-carburant à une valeur de consigne prédéterminée,
    **caractérisé en ce que**

- en marche stationnaire avec le moteur à combustion interne (10) à la température de régime, on augmente par une intervention dans la régulation par le dispositif de régulation de lambda (20) la charge d'oxygène du pot catalytique de gaz d'échappement (17) pendant un temps de diagnostic ($n_{périodes}$, $t_{période}$) jusqu'à une valeur prédéterminée ($D_{stat\_PD}$),
- pendant le temps de diagnostic ($n_{périodes}$, $t_{période}$), on détecte la concentration de NOx dans le canal des gaz d'échappement (16) en aval du pot catalytique de gaz d'échappement à trois voies (17) au moyen d'un détecteur de NOx (19),
- à partir des valeurs de la concentration de NOx (c_NOx), on détermine une valeur de diagnostic stationnaire ($D_{Stat}$) pendant au moins une oscillation du régulateur de lambda,
- on compare la valeur de diagnostic ($D_{Stat}$) avec une valeur de seuil prédéterminée ($S_{Stat\_1}$), et
- en cas de dépassement de la valeur de seuil ($S_{Stat\_1}$), on conclut à un pot catalytique de gaz d'échappement (17) vieilli.

**2.** Procédé selon la revendication 1, **caractérisé en ce que** l'on exploite un nombre prédéterminé ($n_{pénodes}$) d'oscillations du régulateur de lambda.

**3.** Procédé selon la revendication 1 ou 2, **caractérisé en ce que** l'on exploite aussi bien l'alternance positive de l'oscillation du régulateur de lambda, pendant laquelle le signal ($\lambda\_VK$) de la sonde lambda affiche un mélange pauvre air-carburant, que l'alternance négative, pendant laquelle le signal ($\lambda\_VK$) de la sonde lambda affiche un mélange riche air-carburant.

**4.** Procédé selon la revendication 1 ou 2, **caractérisé en ce que** l'on n'exploite que l'alternance positive de l'oscillation du régulateur de lambda, pendant laquelle le signal ($\lambda\_VK$) de la sonde lambda affiche un mélange pauvre air-carburant.

**5.** Procédé selon les revendications 1 et 3, **caractérisé en ce que** l'on détermine la valeur de diagnostic ($D_{Stat}$) par la formule suivante:

$$D_{Stat} = \frac{1}{n_{périodes}} \int_{t_{Start}}^{t_{Startn} + n_{périodes} - t_{période}} \left| C_{NOx}(t) \right| \cdot c_{Pondér}(MAF, N) \cdot dt$$

dans laquelle

$n_{périodes}$    nombre de périodes complètes du régulateur de lambda
$t_{période}$    durée de la période d'une oscillation complète du régulateur de lambda

$t_{Start}$ — démarrage du diagnostic
$C_{NOx}$ — concentration de NOx (décalage corrigé)
$C_{Pondér}$ — facteur de pondération
MAF — courant massique d'air
N — régime (vitesse de rotation)

**6.** Procédé selon les revendications 1 et 4, **caractérisé en ce que** l'on détermine la valeur de diagnostic ($D_{Stat}$) par la formule suivante:

$$D_{Stat} = \frac{1}{n_{périodes}} \int_{t_{Start}}^{t_{Start} + n_{périodes} - t_{période}} \left| C_{NOx}(t) \right| \cdot c_{Pondér}(MAF, N) \cdot \theta \left[ U_{th\_bin} - U_{nox\_bin}(t) \right] \cdot dt$$

dans laquelle

$n_{périodes}$ — nombre de périodes complètes du régulateur de lambda
$t_{période}$ — durée de la période d'une oscillation complète du régulateur de lambda
$t_{Start}$ — démarrage du diagnostic
$C_{NOx}$ — concentration de NOx (décalage corrigé)
$C_{Pondér}$ — facteur de pondération
$U_{th\_bin}$ — seuil pauvre du signal binaire du détecteur de NOx
$U_{NOx\_bin}$ — signal binaire du détecteur de NOx

$$\theta(x) = \begin{cases} 1 \text{ pour } x \geq 0 \\ 0 \text{ pour } x < 0 \end{cases} \quad \text{(fonction de Heaviside)}$$

MAF — courant massique d'air
N — régime (vitesse de rotation)

**7.** Procédé selon la revendication 1, **caractérisé en ce que** l'on utilise comme valeur ($D_{stat\_PD}$) la charge d'oxygène, pour laquelle il ne se produit encore aucune augmentation perceptible de la concentration de NOx en aval du pot catalytique de gaz d'échappement pour un pot catalytique de gaz d'échappement neuf ou pour un pot catalytique limite, qui est précisément encore jugé apte à fonctionner.

**8.** Procédé selon la revendication 7, **caractérisé en ce que** l'on détermine expérimentalement la valeur ($D_{stat\_PD}$) et on la stocke dans un dispositif de mémoire (22) d'une unité de commande (21) commandant le moteur à combustion interne (10).

**9.** Procédé selon la revendication 1, **caractérisé en ce qu'**on lie la valeur de diagnostic ($D_{stat}$) pour la marche stationnaire du moteur à combustion interne (10) avec une valeur de diagnostic ($D_{Light-Off}$) pendant la marche d'échauffement du moteur à combustion interne (10) en une valeur de diagnostic globale ($D_{Global}$).

**10.** Procédé selon la revendication 9, **caractérisé en ce que** l'on forme la valeur de diagnostic globale ($D_{Global}$) selon la formule suivante:

$$\frac{D_{Light-Off}}{S_{Light-Off}} \cdot F_{Light-Off} + \frac{D_{Stat}}{S_{Stat}} \cdot F_{Stat} = D_{Global}$$

dans laquelle
$D_{Light-Off}$ valeur de diagnostic d'un procédé de diagnostic connu pendant la marche d'échauffement du moteur à combustion interne
$S_{Light-Off}$ seuil de diagnostic d'un tel procédé

$F_{Light-Off}$, $F_{Stat}$ facteurs de pondération
$S_{Stat}$ valeur de seuil de diagnostic

**11.** Procédé selon la revendication 10, **caractérisé en ce que** l'on compare la valeur de diagnostic globale ($D_{Global}$) avec une valeur de seuil et, en cas de dépassement de la valeur de seuil, on active un dispositif d'affichage de défauts (24).

# FIG 1

EP 1 228 301 B1

11

13

10

12

14

15

25 27

MAF

N TKW

26

16

18

$\lambda\_VK$

17

19 $c_{NOX}, U_{NOX\_bin}$

21

22

20

23

24

$C_{Wichtung}$ — KF1

$S_{Stat\_1}$

$S_{Stat\_2}$

$U_{th\_bin}$

$D_{Stat\_GW}$  $F_{Stat}$

## FIG 2 A

## FIG 2 B

# FIG 3 A

"magere" Halbwelle
(O2-Überschuß)

λ_VK

0,998

"fette" Halbwelle
(O2-Mangel)

t

# FIG 3 B

C_NOx

AM

KA

KN

t_Gas

t

# FIG 3 C

U_NOx_bin

U_th_bin

t_Start

t